# FASCICULE DE BREVET EUROPEEN

(11) **EP 0 421 851 B1**
(45) Date de publication et mention de la délivrance du brevet: **14.07.1993**
(21) Numéro de dépôt: 90402701.8
(22) Date de dépôt: 01.10.1990
(51) Int. Cl.: F16D 23/14

(54) **Dispositif de butée d'embrayage du type tirée**
Zugkraftbetätigtes Kupplungslager
Clutch release bearing actuated by traction

(30) Priorité: 02.10.1989 FR 8912858
(43) Date de publication de la demande: 10.04.1991
(73) Titulaire: SKF FRANCE, F-92142 Clamart Cédex (FR)
(72) Inventeur: Caron, Fabrice, F-78210 Montigny-Le-Bretonneux (FR); Maestrati, Jean-François, F-92380 Garches (FR)
(74) Mandataire: Casalonga, Axel

(56) Documents cités:
- WO-A-88/09883
- FR-A- 2 618 504

## Description

La présente invention est relative à un dispositif de butée d'embrayage du type tirée, en particulier pour véhicules automobiles. Ce type de butée travaille en traction et en contact permanent avec la face arrière du diaphragme du dispositif débrayeur par l'intermédiaire d'une pièce annulaire de contact dite pièce d'accostage. Le contact permanent est assuré pendant les périodes de manoeuvre du dispositif de butée d'embrayage grâce à une légère précontrainte axiale.

Les dispositifs de butée de ce type comprennent en outre un palier à roulement et un manchon de guidage qui peut coulisser sur un tube-guide, le palier à roulement pouvant subir des déplacements radiaux d'autocentrage lors des opérations de débrayage. Le palier à roulement et son manchon de guidage constituent un ensemble indépendant avant assemblage. Des moyens de solidarisation en traction sont prévus entre le palier à roulement et la pièce d'accostage. Dans ces conditions, le montage du dispositif de butée d'embrayage sur le véhicule et la solidarisation avec le diaphragme consistent généralement à monter tout d'abord la pièce d'accostage sur le diaphragme, l'ensemble constitué par le palier à roulement et le manchon de guidage avec l'organe de commande ou fourchette de débrayage étant prémonté sur la boîte de vitesses. Après montage de la boîte de vitesses sur le véhicule, il convient de pouvoir réaliser "en aveugle" la connexion axiale du palier à roulement avec la pièce d'accostage par simple manoeuvre de la fourchette de commande et ce, de préférence sans aucun outillage et sans risque de fausse manoeuvre.

La demande de brevet français 2 545 172 (VALEO) décrit à cet effet un dispositif de butée d'embrayage comportant un jonc élastique de solidarisation coopérant avec des gorges aménagées sur la pièce d'accostage et sur la bague tournante du palier à roulement. Le montage de la butée à roulement sur le mécanisme de débrayage se fait en exerçant une poussée axiale sur le jonc de solidarisation qui vient alors s'encliqueter dans une gorge annulaire de réception de la pièce d'accostage. On constate cependant dans la pratique qu'un tel dispositif présente un certain nombre d'inconvénients, En effet l'effort axial nécessaire pour l'expansion du jonc de solidarisation sur les rampes prévues à cet effet lors des opérations d'assemblage est relativement élevé et difficile à maîtriser. Le centrage du jonc est donc aléatoire ce qui entraîne des risques de blocage lors du montage. De plus la poussée axiale exercée sur le jonc se fait par l'intermédiaire d'une arête vive délimitant une gorge pratiquée directement sur la bague intérieure du palier à roulement. Il en résulte des risques de coincement du jonc de solidarisation entre cette arête et les autres surfaces de contact.

La présente invention a pour objet un dispositif de butée d'embrayage du type tirée dans lequel les opérations d'assemblage en aveugle sont facilitées et où tout risque de coincement du jonc de solidarisation pendant les opérations d'assemblage est évité.

Le dispositif de butée d'embrayage du type tirée selon l'invention comprend une pièce d'accostage maintenue en contact permanent avec le diaphragme de l'embrayage, un palier à roulement, un manchon de guidage présentant une partie tubulaire capable de coulisser sur un tube-guide et une collerette radiale en contact de friction avec des moyens d'autocentrage autorisant un déplacement radial d'autocentrage du palier à roulement par rapport au manchon de guidage et des moyens de solidarisation en traction entre le palier à roulement et la pièce d'accostage comprenant un jonc annulaire déformable radialement capable de coopérer avec une gorge annulaire de réception dudit jonc pratiquée sur la pièce d'accostage. Selon l'invention, le dispositif comprend des moyens élastiques de poussée axiale solidaires du manchon de guidage, capables de coopérer avec le jonc précité lors des opérations d'assemblage afin de déplacer le jonc de solidarisation depuis une position d'attente, qu'il occupe pendant les opérations d'assemblage du palier et du manchon de guidage avec la pièce d'accostage, jusque dans la gorge de réception.

Dans un premier mode de réalisation de l'invention, les moyens élastiques de poussée axiale comprennent une couronne annulaire reliée à la collerette du manchon de guidage par au moins deux pattes flexibles. Ces pattes peuvent avantageusement être inclinées par rapport à la direction axiale du dispositif afin de faciliter leur fléchissement.

Dans un autre mode de réalisation de l'invention, les moyens élastiques de poussée axiale comprennent au moins trois doigts axiaux solidaires par leur base de la collerette du manchon de guidage. La position d'attente du jonc de solidarisation avant les opérations d'assemblage peut être prévue sur la bague interne du palier à roulement ou sur la pièce d'accostage elle-même, au voisinage de son extrémité opposée au diaphragme ou encore sur une portion du manchon de guidage.

Lorsque la position d'attente du jonc de solidarisation est prévue sur une portion du manchon de guidage, les moyens élastiques de poussée axiale comprennent de préférence trois doigts axiaux solidaires par leur base de la collerette du manchon de guidage, les doigts axiaux comportant à leur extrémité des organes de retenue pour le jonc de solidarisation dans sa position d'attente.

La bague interne du palier à roulement présente de préférence un rebord annulaire jouant le rôle de retenue coopérant avec le jonc de solidarisation lorsque celui-ci est logé dans sa gorge de réception, assurant ainsi la solidarisation du palier à roulement avec la pièce d'accostage lors du coulissement du palier à roulement et du manchon de guidage sous l'action d'efforts axiaux exercés par l'organe de commande, par exemple une fourchette de débrayage.

Un capot peut être prévu pour loger le palier à roulement et transmettre les efforts axiaux de l'organe de commande ou fourchette de débrayage vers le palier à roulement.

L'invention sera maintenant décrite de manière plus précise sur la base de trois modes de réalisation particuliers pris à titre d'exemples nullement limitatifs et illustrés par les dessins annexés sur lesquels :
la figure 1 est une demi-vue en coupe d'un premier mode de réalisation d'un dispositif de butée d'embrayage selon l'invention;
la figure 2 est une vue partielle extérieure de dessus du manchon de guidage montrant les moyens élastiques de poussée axiale du mode de réalisation de la figure 1;
les figures 3 à 6 sont des demi-vues en coupe montrant les opérations d'assemblage du dispositif de butée d'embrayage illustré sur la figure 1;
la figure 7 est une demi-vue en coupe d'un deuxième mode de réalisation d'un dispositif de butée d'embrayage selon l'invention;
les figures 8 à 11 sont des demi-vues en coupe montrant les opérations d'assemblage du dispositif de butée d'embrayage du mode de réalisation illustré sur la figure 7;
la figure 12 est une demi-vue en coupe d'une troisième mode de réalisation d'un dispositif de butée d'embrayage selon l'invention; et
les figures 13 à 16 montrent les opérations d'assemblage du dispositif de butée d'embrayage illustré sur la figure 12.

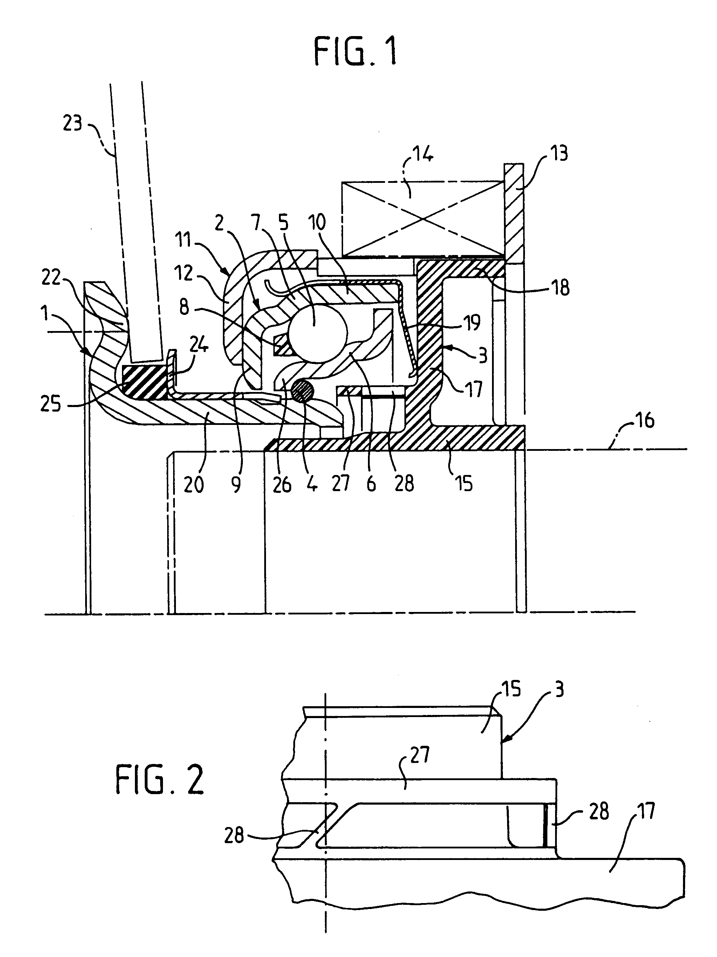

Tel qu'il est illustré sur les figures 1 et 2, le dispositif de butée d'embrayage selon l'invention comprend une pièce d'accostage 1, un palier à roulement 2 et un manchon de guidage 3. Le palier à roulement 2 et la pièce d'accostage 1 sont solidarisés en direction axiale par un jonc de solidarisation élastique 4 qui est ici un anneau métallique fendu constitué par un enroulement d'un fil métallique, l'ensemble ayant une forme générale torique de section circulaire et étant capable de subir une variation de diamètre.

Le palier à roulement 2 comprend, de manière classique, une pluralité de billes 5 capables de rouler sur les chemins de roulement respectifs d'une bague intérieure tournante 6 et d'une bague extérieure fixe 7 réalisées par emboutissage. Les billes 5 sont maintenues avec des espacements circonférentiels réguliers par une cage 8. La bague extérieure 7 présente une collerette radiale 9 dirigée vers l'intérieur et une portion cylindrique 10. Un capot 11 vient enserrer l'ensemble constitué par le palier à roulement 2 et le manchon de guidage 3. A cet effet, le capot 11 présente à l'une de ses extrémités une collerette radiale 12 dirigée vers l'intérieur venant en appui axial contre la collerette 9 de la bague extérieure 2. A son autre extrémité, le capot 11 présente une collerette radiale 13 dirigée vers l'extérieur sur laquelle peuvent venir en appui les doigts 14 de la fourchette de débrayage illustrée schématiquement sur la figure et qui sont capables d'exercer un effort de traction axial sur l'ensemble du dispositif de butée d'embrayage.

Le manchon de guidage 3 présente une partie tubulaire 15 capable de coulisser sur un tube-guide 16 et une collerette radiale 17. La partie tubulaire 15 s'étend de part et d'autre de la collerette radiale 17. La collerette radiale 17 présente à son extrémité libre une portion annulaire 18 qui vient s'engager dans un logement prévu sur le capot 11 de façon à assurer la solidarisation entre le manchon coulissant 3 et le capot 11.

Un flasque annulaire d'autocentrage 19 est monté sur la bague extérieure fixe 7 et assure un contact de friction élastique contre l'une des faces frontales de la collerette radiale 17. De cette manière, le palier à roulement 2 peut se déplacer légèrement radialement par rapport au manchon de guidage 3 afin de permettre son autocentrage lors d'une opération de débrayage.

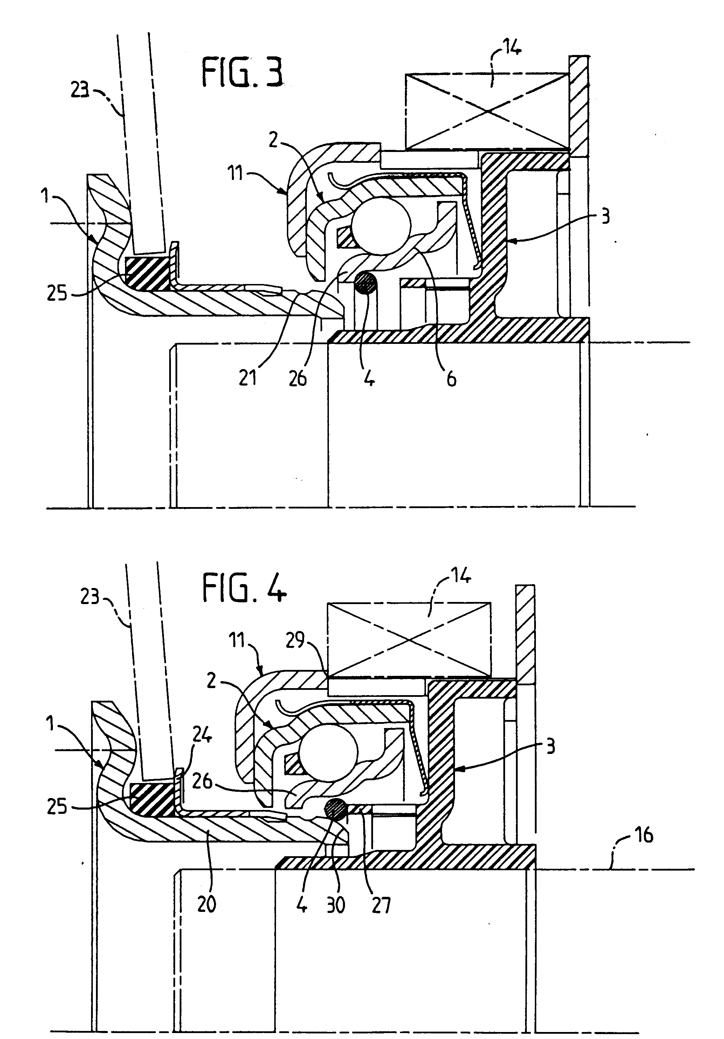

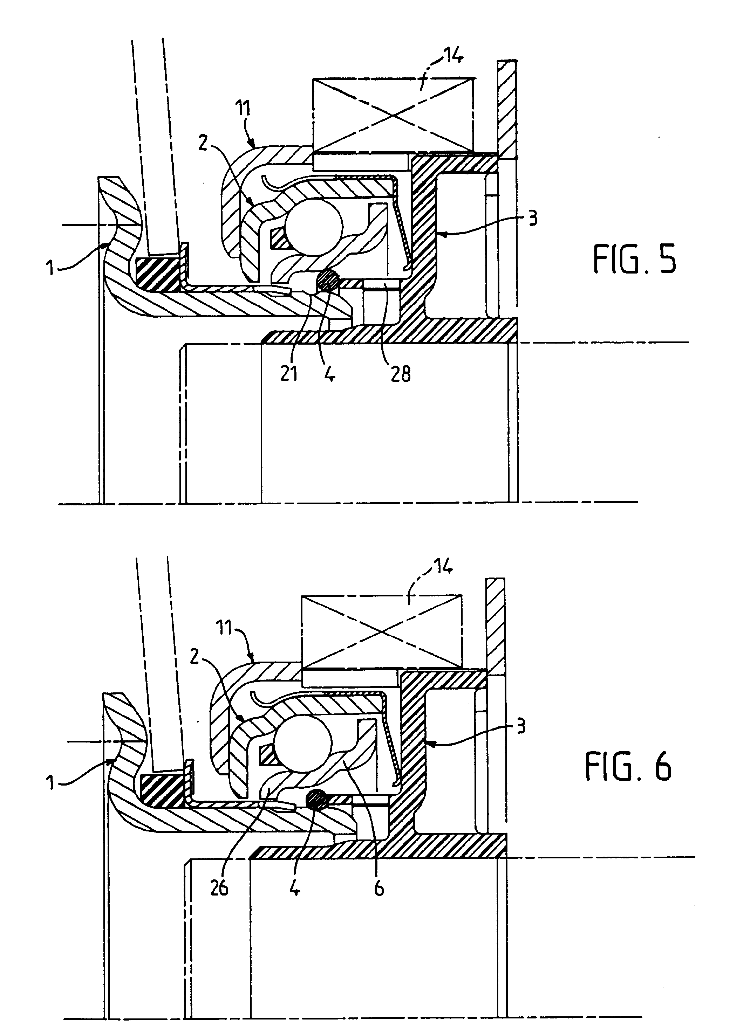

La pièce d'accostage 1 présente une partie cylindrique 20 dirigée vers le palier à roulement 2 et comportant une gorge annulaire 21 (figures 3 et 5) pour la réception du jonc de solidarisation 4. La pièce d'accostage 1 comporte également à son extrémité opposée, une partie torique 22 qui vient attaquer la face arrière du diaphragme 23 de l'embrayage. La liaison axiale entre la pièce d'accostage 1 et le diaphragme 23 avant et pendant les opérations d'assemblage sur le véhicule est réalisée par l'encliquetage d'une rondelle 24 sur la partie cylindrique 20 de la pièce d'accostage 1 avec interposition d'un anneau élastique 25 qui permet d'améliorer le centrage de la pièce d'accostage sur le diaphragme avant l'assemblage du palier à roulement 2 sur la pièce d'accostage 1.

La bague intérieure 6 présente un rebord annulaire 26 dont le profil intérieur est adapté pour pouvoir coopérer avec le jonc de solidarisation 4 lorsque celui-ci est logé dans la gorge de réception 21. Une fois monté, le dispositif de butée d'embrayage tirée subit toujours un effort axial de traction dirigé dans le même sens, cet effort variant entre une valeur de précharge, lorsque la pédale de débrayage n'est pas actionnée et un effort de débrayage croissant lors d'une manoeuvre de débrayage sous l'action des doigts 14 de la fourchette de débrayage. On notera que les doigts 14 de la fourchette de débrayage qui viennent porter ici sur la surface d'appui de la collerette 13 du capot 11 peuvent également agir directement sur le manchon de guidage 3 qui présente alors une configuration adaptée. Les efforts axiaux exercés par les doigts 14 de la fourchette de débrayage sont donc transmis par le capot 11 au palier à roulement 2 qui les retransmet ensuite au diaphragme 23 par l'intermédiaire de la pièce d'accostage 1 solidarisée avec le palier à roulement 2 grâce à l'existence du jonc 4.

Une couronne annulaire 27 est solidaire de la collerette 17 du manchon de guidage 3 par trois pattes élastiques flexibles 28. La couronne annulaire 27 est concentrique à la partie cylindrique 15 du manchon de guidage 3 et s'étend en direction de la pièce d'accostage 1. La couronne 27 présente un diamètre tel qu'elle puisse entrer en contact avec le jonc de solidarisation 4. Son diamètre interne est légèrement supérieur au diamètre externe de la partie cylindrique 20 de la pièce d'accostage 1.

Dans le mode de réalisation illustré, le manchon de guidage 3 est réalisé par moulage d'une matière plastique synthétique. La couronne annulaire 27 et les pattes flexibles 28 sont venues de moulage avec le manchon de guidage 3. Les pattes flexibles 28 sont inclinées par rapport à la direction axiale du dispositif pour permettre leur fléchissement comme on peut le voir sur la figure 2. La couronne 27 peut donc se déplacer élastiquement en direction axiale lors du fléchissement des pattes élastiques 28. Le nombre des pattes 28 peut être modifié à condition d'être au moins de deux.

On va maintenant décrire une opération d'assemblage d'un tel dispositif de butée d'embrayage en se référant aux figures 3 à 6.

La pièce d'accostage 1 est tout d'abord montée sur le diaphragme 23. Elle reste centrée grâce à l'anneau élastique 25. Le jonc de solidarisation 4 est maintenu en position d'attente à l'intérieur du rebord annulaire 26 de la bague interne 6. Le diamètre extérieur du jonc 4 à l'état libre est inférieur ou égal à l'alésage cylindrique venant se raccorder tangentiellement au profil intérieur du rebord 26. Le jonc est ainsi maintenu en position d'attente dans la bague intérieure, son déplacement axial possible étant limité d'un côté par la retombée radiale du rebord annulaire 26 et de l'autre côté par la couronne annulaire 27 du manchon de guidage 3. On notera que dans cette position, le diamètre intérieur du jonc 4 est inférieur ou égal au diamètre de fond de la gorge de réception 21 aménagée sur la pièce d'accostage 1. On exerce alors, comme illustré sur la figure 4 une poussée axiale sur les doigts 14 de la fourchette de débrayage vers la gauche sur les figures. Les doigts 14 viennent en appui sur un décrochement 29 du capot 11. Le jonc 4 vient en contact avec une rampe torique 30 à l'extrémité de la partie cylindrique 20 de la pièce d'accostage. Le jonc 4 cesse d'être en contact avec le rebord annulaire 26. Il reste sur la rampe torique 30 jusqu'à ce qu'il entre en contact avec la couronne annulaire 27 en raison du coulissement de l'ensemble constitué par le palier à roulement 2 et le manchon de guidage 3 sur le tube-guide 16. Sous l'action de la poussée axiale, la pièce d'accostage 1 se déplace légèrement jusqu'à ce que la rondelle 24 vienne en contact avec le diaphragme 23. On notera que la pièce d'accostage 1 reste toujours parfaitement centrée grâce à l'anneau élastique 25.

En poursuivant l'action de poussée comme illustré sur la figure 5, le diamètre du jonc élastique 4 s'agrandit jusqu'à ce que le jonc 4 passe au-dessus de la portion cylindrique 20. Lors de cette poussée, les pattes élastiques 28 fléchissent, assurant ainsi une poussée axiale élastique sur le jonc de solidarisation 4.

Cette poussée se poursuit jusqu'à ce que le jonc de solidarisation 4 ait pénétré dans la gorge de réception 21 comme illustré sur la figure 6.

Une traction sur les doigts 14 de la fourchette de débrayage vers la droite sur la figure, à partir de la position illustrée sur la figure 6, provoque le déplacement du palier à roulement 2 jusque dans la position illustrée sur la figure 1 dans laquelle le rebord annulaire de retenue 26 de la bague intérieure 6 est venu en contact avec le jonc de solidarisation 4. Les opérations d'assemblage sont terminées et la butée de débrayage peut maintenant fonctionner.

L'élasticité axiale des moyens de poussée constitués par la couronne 27 et les pattes flexibles 28 permet d'éviter tout risque de coincement du jonc 4 lors de la manoeuvre d'assemblage en aveugle et permet également de limiter le déplacement axial nécessaire à ladite manoeuvre.

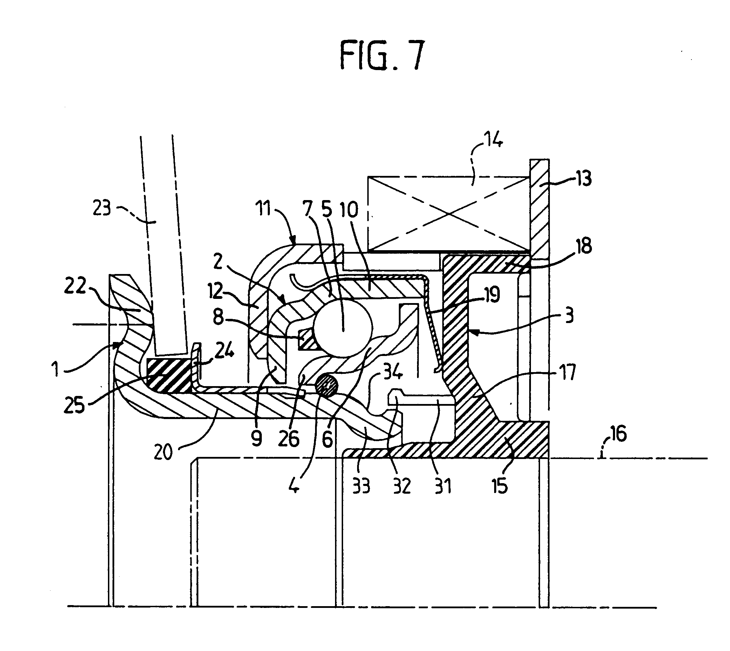

Dans le mode de réalisation illustré sur la figure 7 où les pièces similaires portent les mêmes référence, les moyens de poussée sur le jonc de solidarisation 4 sont constitués par trois doigts axiaux 31 solidaires par leur base de la collerette 17 du manchon de guidage 3. Comme précédemment, le manchon de guidage 3 est réalisé par moulage d'une matière plastique synthétique et les trois doigts axiaux 31 sont venus de moulage avec le manchon 3. Les doigts axiaux 31 sont dirigés vers la pièce d'accostage 1 et placés sensiblement de la même manière que la couronne 27 du mode de réalisation précédent. Les doigts axiaux 31 présentent à leur extrémité libre un renflement 32.

Dans ce mode de réalisation, la partie cylindrique 20 de la pièce d'accostage 1 présente à son extrémité libre à l'intérieur du palier à roulement 2 une portion annulaire 33 ayant un diamètre inférieur à celui de la partie cylindrique 20 et comportant, a l'extérieur, une gorge 34 capable de recevoir le jonc de solidarisation 4 dans sa position d'attente avant assemblage. Les trois doigts axiaux 31 sont disposés de façon à pouvoir entrer en contact avec le jonc 4 lorsque celui-ci est dans sa position d'attente.

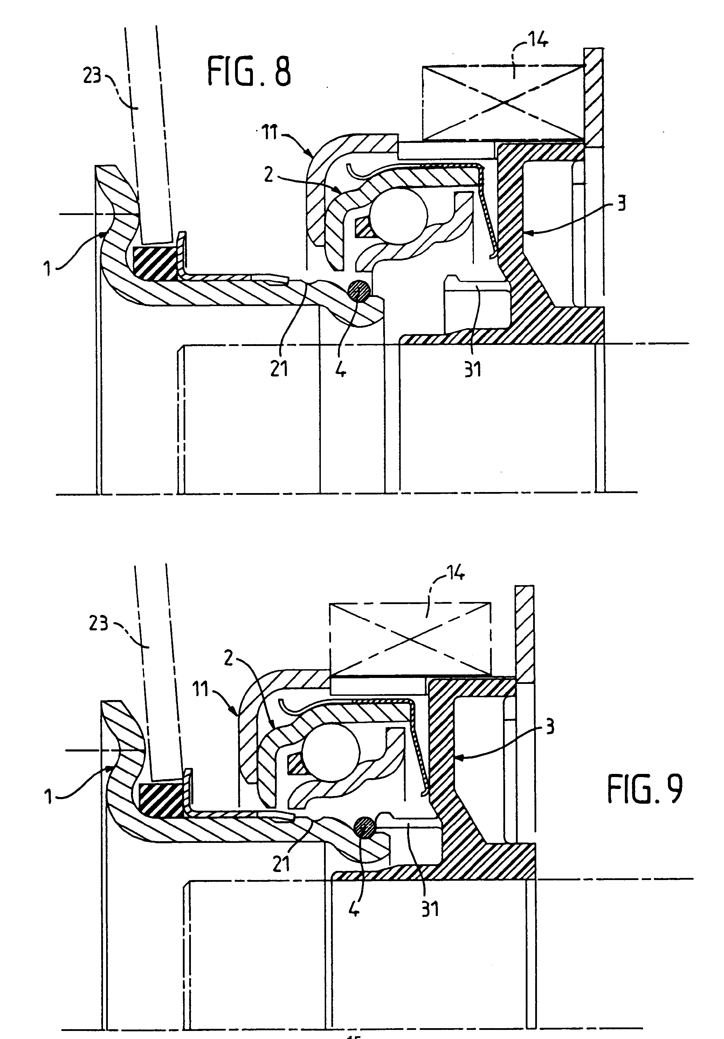

En se référant aux figures 8 à 11 on va maintenant expliquer les opérations d'assemblage du mode de réalisation de la figure 7.

D'une manière générale, l'assemblage se fait d'une manière analogue au mode de réalisation précédent. Initialement, la pièce d'accostage 1 est donc montée et maintenue centrée sur l'embrayage 23. Le jonc de solidarisation 4 est dans sa position d'attente a l'extrémité de la pièce d'accostage 1. Son diamètre interne à l'état libre est inférieur au diamètre de fond de la gorge de réception 21 et est inférieur ou égal au diamètre de fond de la gorge 34.

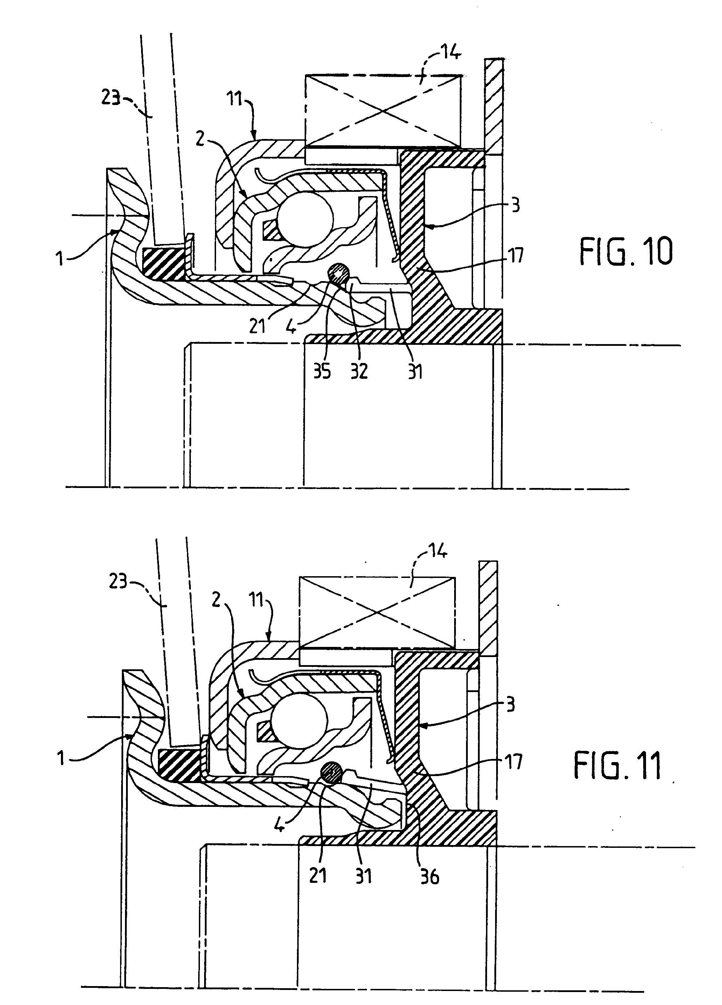

On exerce comme précédemment une action de poussée axiale vers la gauche sur les figures par l'intermédiaire des doigts 14 de la fourchette de débrayage jusqu'à ce que les doigts de poussée 31 viennent en contact avec le jonc 4 dans sa position d'attente, comme illustré sur la figure 9. L'action de poussée se poursuit comme on peut le voir sur la figure 10 entraînant la montée du jonc 4 sur une portion torique 35 située entre la gorge 34 et la gorge de réception 21. Le diamètre du jonc 4 augmente progressivement. Les renflements d'extrémité 32 maintiennent convenablement le jonc 4 qui subit la poussée des doigts 31 et ne risque pas de passer au-dessus de ces derniers.

L'action de poussée se poursuivant comme illustré sur la figure 11, les doigts 31 fléchissant de manière élastique jusqu'à ce que jonc 4 pénètre dans la gorge de réception 21. Comme on pourra le noter sur la figure 11, la collerette 17 du manchon de guidage 3 du mode de réalisation des figures 7 à 11 présente un décrochement 36 qui n'existait pas dans le mode de réalisation de la figure 1 de façon à permettre à l'extrémité de la pièce d'accostage 1 de venir se loger dans cet évidement 36 lors des opérations d'assemblage, comme illustré à la figure 11.

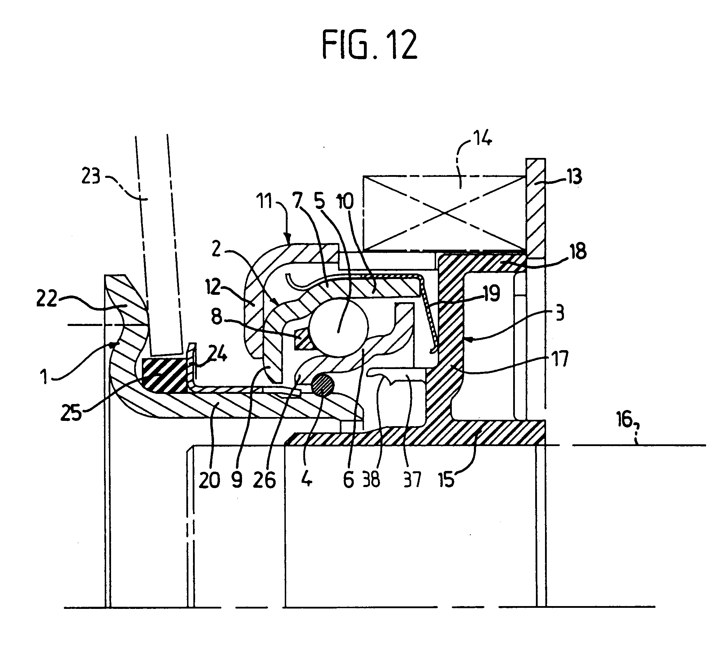

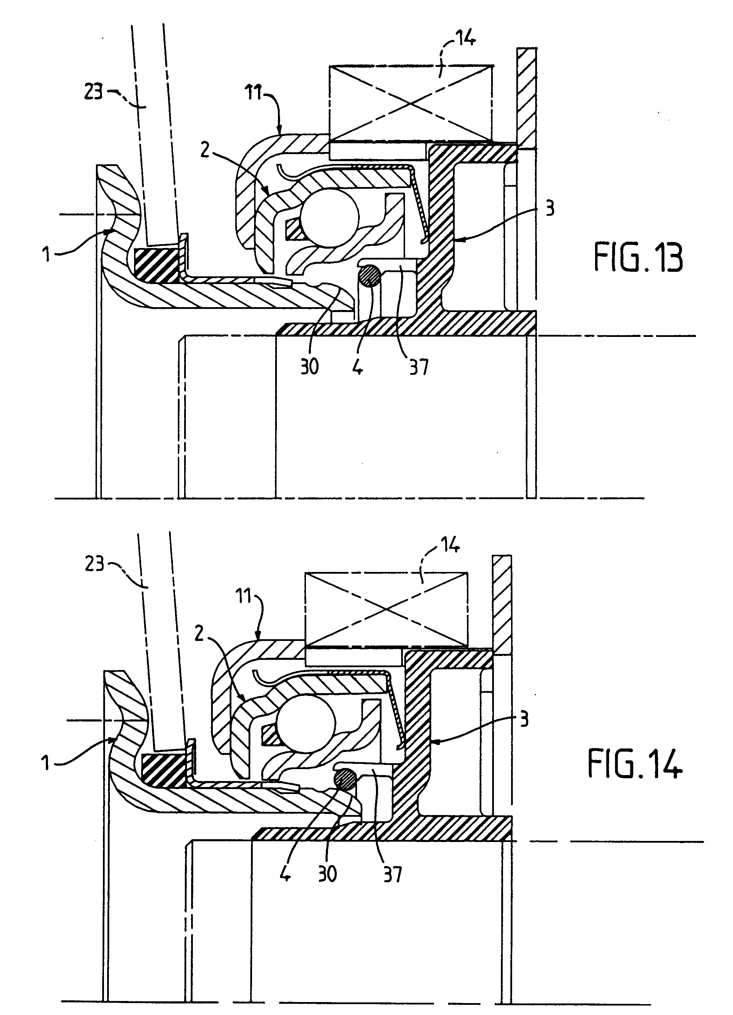

Dans le mode de réalisation illustré sur la figure 12, les pièces identiques ou similaires portent les mêmes références. Dans ce mode de réalisation, les moyens élastiques de poussée axiale sur le jonc de solidarisation 4 sont constitués par trois doigts axiaux 37 solidaires par leur base de la collerette 17 du manchon de guidage 3. Comme précédemment, les doigts 37 sont venus de moulage avec le manchon de guidage 3 réalisé en matière plastique synthétique. Les doigts axiaux 37 comportent à leur extrémité libre une griffe de retenue 38. Les doigts 37 sont placés sur le manchon de guidage 3 en direction de la pièce d'accostage 1 et dans une position telle que les griffes 38 puissent recevoir et maintenir le jonc de solidarisation 4 dans sa position d'attente avant assemblage. Cette position est illustrée sur la figure 13. Dans cette position d'attente, le jonc 4 est légèrement précontraint radialement par les doigts 37.

Si, à partir de cette position, on exerce une poussée par l'intermédiaire des doigts 14 de la fourchette de débrayage, l'ensemble constitué par le palier à roulement 2 et le manchon de guidage 3, portant le jonc de solidarisation 4 en position d'attente, se déplace vers la pièce d'accostage 1 initialement montée et maintenue centrée par rapport au diaphragme 23. Ce mouvement se poursuit jusqu'à ce que le jonc de solidarisation 4 entre en contact avec la rampe torique 30. Les doigts flexibles 35 fléchissent alors vers l'extérieur le jonc 4 restant toujours retenu par le griffes 38 (figure 14).

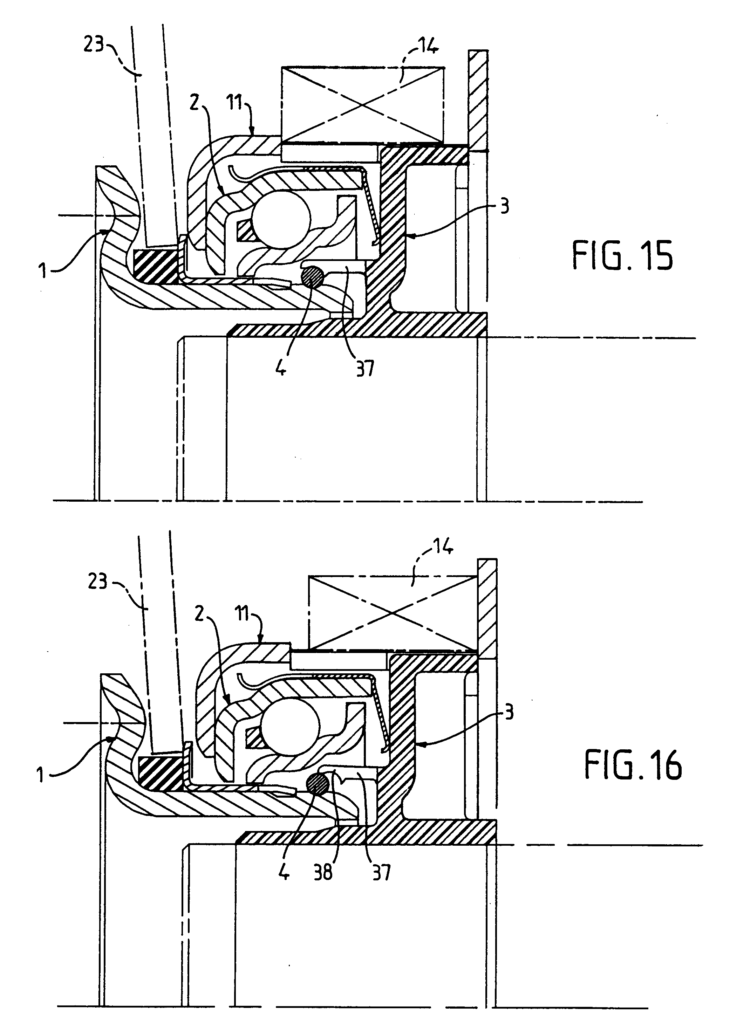

Le mouvement se poursuit jusqu'à ce que le jonc 4 ait pénétré dans la gorge de réception 21 comme illustré sur la figure 15. On notera que dans cette position les doigts 37 ne sont plus fléchis. Le diamètre du jonc 4 à l'état libre est inférieur ou égal, comme précédemment, au diamètre de fond de la gorge 21.

On exerce alors une action de traction vers la droite sur la figure sur les doigts 14 de la fourchette de débrayage comme illustré sur la figure 16, ce qui provoque le mouvement de coulissement de retour du manchon de guidage 3. Les doigts 37 fléchissent à nouveau légèrement vers l'extérieur de façon à permettre la libération du jonc 4 des griffes de retenue 38. Le mouvement se poursuit jusqu'à la position illustrée sur la figure 12.

La présente invention permet d'obtenir un dispositif de butée d'embrayage du type tirée dont les opérations d'assemblage en aveugle présentent une fiabilité accrue grâce à un guidage efficace du jonc de solidarisation et une action de poussée élastique sur ce dernier évitant tout risque de coincement. De plus le dispositif de l'invention présente une grande simplicité du fait du nombre de pièces réduites et de leur structure simple entraînant une fabrication particulièrement économique.

## Revendications

1. Dispositif de butée d'embrayage du type tirée comprenant une pièce d'accostage (1) maintenue en contact permanent avec le diaphragme (23) de l'embrayage, un palier à roulement (2), un manchon de guidage (3) présentant une partie tubulaire (15) capable de coulisser sur un tube-guide (16) et une collerette radiale (17) en contact de friction avec des moyens d'autocentrage (19) autorisant un déplacement radial d'autocentrage du palier à roulement (2) par rapport au manchon de guidage (3) et des moyens de solidarisation en traction entre le palier à roulement (2) et la pièce d'accostage (1) comprenant un jonc annulaire (4) déformable radialement, capable de coopérer avec une gorge annulaire de réception (21) pratiquée sur la pièce d'accostage (1), caractérisé par le fait qu'il comprend des moyens élastiques de poussée axiale solidaires du manchon de guidage (3) capables de coopérer avec le jonc précité lors des opérations d'assemblage afin de déplacer le jonc depuis une position d'attente, qu'il occupe avant les opérations d'assemblage du palier et du manchon de guidage avec la pièce d'accostage, jusque dans la gorge de réception.

2. Dispositif de butée d'embrayage selon la revendication 1, caractérisé par le fait que les moyens élastiques de poussée axiale comprennent une couronne annulaire (27) reliée à la collerette (17) du manchon de guidage (2) par au moins deux pattes flexibles (28).

3. Dispositif de butée d'embrayage selon la revendication 2, caractérisé par le fait que les pattes flexibles (28) sont inclinées par rapport à la direction axiale du dispositif pour permettre leur fléchissement.

4. Dispositif de butée d'embrayage selon la revendication 1, caractérisé par le fait que les moyens élastiques de poussée axiale comprennent au moins trois doigts axiaux (31, 37) solidaires par leur base de la collerette (17) du manchon de guidage (3).

5. Dispositif de butée d'embrayage selon l'une quelconque des revendications précédentes, caractérisé par le fait qu'il comprend des moyens définissant une position d'attente pour le jonc annulaire avant assemblage, prévue sur la bague intérieure du palier à roulement.

6. Dispositif de butée d'embrayage selon l'une quelconque des revendications 1 à 4, caractérisé par le fait qu'il comprend des moyens définissant une position d'attente pour le jonc annulaire avant assemblage, prévue sur la pièce d'accostage (1), au voisinage de son extrémité opposée au diaphragme.

7. Dispositif de butée d'embrayage selon la revendication 6, caractérisé par le fait que la pièce d'accostage présente une partie cylindrique (20) munie d'une gorge de réception (21) pour le jonc annulaire et d'une gorge annulaire supplémentaire (34) de diamètre inférieur à celui de la gorge de réception, servant de position d'attente pour le jonc annulaire avant assemblage.

8. Dispositif de butée d'embrayage selon l'une quelconque des revendications 1 à 4, caractérisé par le fait qu'il comprend des moyens définissant une position d'attente pour le jonc annulaire avant assemblage, prévue sur le manchon de guidage (3).

9. Dispositif de butée d'embrayage selon la revendication 8, caractérisé par le fait que les moyens élastiques de poussée axiale comprennent au moins trois doigts axiaux solidaires par leur base de la collerette (17) du manchon de guidage (3), chaque doigt axial comportant à son extrémité libre un organe de retenue définissant la position d'attente pour le jonc annulaire avant assemblage.

10. Butée d'embrayage selon l'une quelconque des revendications précédentes, caractérisée par le fait que la bague intérieure (6) du palier à roulement (2) présente un rebord annulaire (26) jouant le rôle de retenue et dont le profil intérieur coopéré avec le jonc annulaire (4) logé dans la gorge de réception pour assurer la solidarisation du palier à roulement (2) avec la pièce d'accostage (1) lors du coulissement du palier à roulement (2) et du manchon de guidage (3) sur le tube-guide (16) sous l'action d'une traction exercée par un organe de commande (14).

11. Dispositif de butée d'embrayage selon l'une quelconque des revendications précédentes, caractérisé par le fait qu'à l'état libre, le diamètre interne du jonc annulaire est inférieur ou égal au diamètre de fond de la gorge de réception (21) pratiquée sur la pièce d'accostage (1).

12. Dispositif de butée d'embrayage selon l'une quelconque des revendications précédentes, caractérisé par le fait qu'il comprend des moyens (24, 25) de centrage et de maintien de la pièce d'accostage (1) sur le diaphragme (23) de l'embrayage avant assemblage.

13. Dispositif de butée d'embrayage selon l'une quelconque des revendications précédentes, caractérisé par le fait qu'il comprend un capot (11) enveloppant le palier à roulement (2) et le manchon de guidage (3) et comportant des moyens de maintien des doigts (14) d'un organe d'actionnement.

14. Ensemble permettant la réalisation d'un dispositif de butée d'embrayage selon les revendications 2 ou 3 caractérisé par le fait qu'il comprend un palier à roulement (2) muni d'une bague intérieure (16) présentant un rebord annulaire (26) retenant un jonc annulaire (4) et un manchon de guidage (3) présentant une partie tubulaire (15), et une collerette radiale (17) en contact de friction avec des moyens d'autocentrage (19) du palier à roulement (2) et une couronne annulaire (27) reliée à la collerette (17) du manchon de guidage par au moins deux pattes flexibles (28).

15. Ensemble permettant la réalisation d'un dispositif de butée d'embrayage selon l'une des revendications 8 ou 9, caractérisé par le fait qu'il comprend un palier à roulement (2), un manchon de guidage (3) présentant une partie tubulaire (15), une collerette radiale (17) en contact de friction avec des moyens d'autocentrage (19) du palier à roulement et au moins trois doigts axiaux (37) solidaires par leur base de la collerette (17) du manchon de guidage (3) et comportant à leur extrémité un organe de retenue (38) recevant un jonc annulaire (4) déformable, légèrement précontraint radialement par lesdits doigts.

16. Procédé d'assemblage d'un dispositif de butée d'embrayage du type tirée selon l'une quelconque des revendications précédentes, caractérisé par le fait que :
- on déplace axialement relativement l'une vers l'autre la pièce d'accostage (1) et l'ensemble formé par le palier à roulement (2) et le manchon de guidage (3) qui coulisse sur un tube-guide (16), le jonc annulaire déformable (4) étant en position d'attente sur l'une de ces pièces, ce déplacement étant fait par une action des doigts (14) de l'organe d'actionnement;
- en poursuivant le déplacement axial précité, on exerce une poussée axiale sur le jonc annulaire (4) par l'intermédiaire des moyens élastiques (27, 28; 31; 37) de poussée axiale, solidaires du manchon de guidage (3);
- on poursuit la poussée axiale sur le jonc élastique (4) qui se déforme radialement jusqu'au moment où il pénètre dans la gorge de réception (21) de la pièce d'accostage (1);
- on exerce ensuite une traction axiale sur le palier à roulement (2) par l'intermédiaire des doigts de l'organe d'actionnement jusqu'à ce que la bague intérieure du palier à roulement (2) entre en contact avec le jonc (4) maintenu dans la gorge de réception (21).

## Patentansprüche

1. Zugkraftbetätigtes Kupplungslager, umfassend ein in ständigem Kontakt mit der Kupplungsmembran (23) gehaltenes Kopplungsstück (1), ein Wälzlager (2), eine Führungsmanschette (3), welche einen auf einem Führungsrohr (16) verschiebbaren Rohrabschnitt (15) und einen Radialkragen (17) in Reibkontakt mit Selbstzentriermitteln (19) aufweist, welch letztere eine radiale Verstellung zur Selbstzentrierung des Wälzlagers (2) bezüglich der Führungsmanschette (3) ermöglichen, und Mittel, an unter Zug eine Verbindung zwischen dem Wälzlager (2) und dem Kopplungsstück (1) herzustellen, wobei diese Mittel einen radial deformierbaren, kreisförmigen Ring (4) umfassen, der mit einer ringförmigen, auf dem Kopplungsstück (1) angeordneten Aufnahmerille (21) zusammenzuwirken vermag,
dadurch gekennzeichnet,
daß es elastische, mit der Führungsmanschette (3) fest verbundene Axialdruckmittel umfaßt, die bei den Zusammenbau-Arbeitsgängen mit dem erwähnten Ring zusammenzuwirken vermögen, um den Ring von einer Bereitschaftsposition, die er vor den Arbeitsgängen des Zusammenbaus des Wälzlagers und der Führungsmanschette mit dem Kopplungsstück einnimmt, bis in die Aufnahmerille zu verstellen.

2. Kupplungslager nach Anspruch 1,
dadurch gekennzeichnet,
daß die elastischen Axialdruckmittel einen Ringkranz (27) anfassen, welcher mittels mindestens zweier flexibler Lappen (28) an dem Kragen (17) der Führungsmanschette befestigt ist.

3. Kupplungslager nach Anspruch 2,
dadurch gekennzeichnet,
daß die flexiblen Lappen (28) gegenüber der Axialrichtung des Lagers geneigt sind, um ihre Biegung zu ermöglichen.

4. Kupplungslager nach Anspruch 1,
dadurch gekennzeichnet,
daß die elastischen Axialdruckmittel mindestens drei Axialfinger (31, 37) anfassen, welcher über ihre Basis fest mit dem Kragen (17) der Führungsmanschette (3) verbunden sind.

5. Kupplungslager nach einem der vorangehenden Ansprüche,
dadurch gekennzeichnet,
daß es Mittel umfaßt, die eine auf dem Innenring des Wälzlagers vorgesehene Bereitschaftsposition für den kreisförmigen Ring vor dem Zusammenbau definieren.

6. Kupplungslager nach einem der Ansprüche 1 bis 4,
dadurch gekennzeichnet,
daß es Mittel umfaßt, die eine Bereitschaftsposition für den kreisförmigen Ring vor dem Zusammenbau definieren, wobei diese Position auf dem Kopplungsstück (1) in der Nähe seines der Membran entgegengesetzten Endes vorgesehen ist.

7. Kupplungslager nach Anspruch 6,
dadurch gekennzeichnet,
daß das Kopplungsstück einen zylindrischen Abschnitt (20) aufweist, welcher mit einer Aufnahmerille (21) für den kreisförmigen Ring und mit einer zusätzlichen kreisförmigen Rille (34) mit einem gegenüber dem Durchmesser der Aufnahmerille geringeren Durchmesser versehen ist, wobei die zusätzliche Rille als Bereitschaftsposition für den kreisförmigen Ring vor dem Zusammenbau dient.

8. Kupplungslager nach einem der Ansprüche 1 bis 4,
dadurch gekennzeichnet, daß es Mittel umfaßt, welche eine auf der Führungsmanschette (3) vorgesehene Bereitschaftspositïon für den kreisförmigen Ring vor dem Zusammenbau definieren.

9. Kupplungslager nach Anspruch 8,
dadurch gekennzeichnet,
daß die elastischen Axialdruckmittel mindestens drei Axialfinger anfassen, welche über ihre jeweilige Basis mit dem Kragen (17) der Führungsmanschette (3) fest verbunden sind, wobei jeder Axialfinger an seinem freien Ende ein Halteorgan besitzt, welches die Bereitschaftsposition für den kreisförmigen Ring vor dem Zusammenbau definiert.

10. Kupplungslager nach einem der vorangehenden Ansprüche,
dadurch gekennzeichnet,
daß der Innenring (6) des Wälzlagers (2) einen ringförmigen Randansatz (26) aufweist, welcher die Rolle eines Anschlags spielt und dessen Innenprofil mit dem in der Aufnahmerille sitzenden kreisförmigen Ring (4) zusammenwirkt, um die Verbindung des Wälzlagers (2) mit dem Kopplungsstück (1) bei der Verschiebung des Wälzlagers (2) und der Führungsmanschette (3) auf dem Führungsrohr (16) unter Einwirkung einer von einem Steuerorgan (14) ausgeübten Zugkraft sicherzustellen.

11. Kupplungslager nach einem der vorangehenden Ansprüche,
dadurch gekennzeichnet,
daß im freien Zustand der Innendurchmesser des kreisförmigen Rings kleiner als der oder gleich dem Bodendurchmesser der auf dem Kopplungsstück (1) angeordneten Aufnahmerille (21) ist.

12. Kupplungslager nach einem der vorangenenden Ansprüche,
dadurch gekennzeichnet,
daß es Mittel (24, 25) zur Zentrierung und Halterung des Kopplungsstückes (1) auf der Kupplungsmembran vor dem Zusammenbau umfaßt.

13. Kupplungslager nach einem der vorangehenden Ansprüche,
dadurch gekennzeichnet,
daß es eine Kappe (11) umfaßt, welche das Wälzlager (2) und die Führungsmanschette (3) umhüllt und Haltemittel für die Zapfen (14) eines Betätigungsorgans aufweist.

14. Anordnung zur Herstellung eines Kupplungslagers nach Anspruch 2 oder 3,
dadurch gekennzeichnet,
daß sie ein mit einem Innenring (16) versehenes Wälzlager (2), dessen Innenring einen ringförmigen Randansatz (26) zur Abstützung eines kreisförmigen Rings (4) aufweist, und eine Führungsmanschette (3) umfaßt, wobei letztere einen Rohrabschnitt (15), einen Radialkragen (17) in Reibkontakt mit Selbstzentriermitteln (19) des Wälzlagers (2) sowie einen Ringkranz (27) aufweist, wobei der letztere mit dem Kragen (17) der Führungsmanschette über mindestens zwei flexible Lappen (28) verbunden ist.

15. Anordnung zur Herstellung eines Kupplungslagers nach Anspruch 8 oder 9,
dadurch gekennzeichnet,
daß sie ein Wälzlager (2) und eine Führungsmanschette (3) umfaßt, welch letztere einen Rohrabschnitt (15), einen Radialkragen (17) in Reibkontakt mit Selbstzentriermitteln (19) des Wälzlagers und mindestens drei Axialfinger (37) aufweist, wobei die Axialfinger über ihre Basis fest mit dem Kragen (17) der Führungsmanschette (3) verbunden sind, und an ihrem jeweiligen Ende ein Halteorgan (38) besitzen, das seinen deformiebaren, durch diese Finger radial leicht vorgespannten, kreisförmigen Ring (4) aufnimmt.

16. Verfahren zum Zusammenbau eines zugkraftbetätigten Kupplungslagers nach einem der vorangehenden Ansprüche, gekennzeichnet durch folgende Schritte:
- Das Kopplungsglied (1) und die von dem Wälzlager (2) und der auf einem Führungsrohr (16) verschiebbaren Führungsmanschette (3) gebildete Anordnung werden relativ zueinander in Axialrichtung verstellt, wobei der deformierbare kreisförmige Ring (4) sich in Bereitschaftstellung auf einem dieser Teile befindet und wobei die Verstellung unter Einwirkung der Zapfen (14) des Betätigungsorgans erfolgt;
- während der erwähnten Axialverstellung wird ein Axialdruck auf den kreisförmigen Ring (4) mittels der elastischen Axialdruckmittel (27, 28; 31; 37), welche mit der Führungsmanschette fest verbunden sind, ausgeübt;
- der Axialdruck wird auf den sich radial verformenden elastischen Ring (4) bis zu dem Moment weiter ausgeübt, in welchem dieser in die Aufnahmerille (21) des Kopplungsstückes (1) gelangt;
- danach wird eine axiale Zugkraft auf das Wälzlager (2) über die Zapfen des Betätigungsorgans ausgeübt, bis der Innenring des Wälzlagers (2) in Kontakt mit dem in der Aufnahmerille (21) gehaltenen Ring (4) gelangt.

## Claims

1. Clutch release bearing device of the pulled type comprising a closing component (1) held in permanent contact with the diaphragm (23) of the clutch, a roller-contact bearing (2), a guide sleeve (3) having a tubular part (15) capable of sliding on a guide tube (16) and a radial collar (17) in frictional contact with self-centring means (19) allowing a self-centring radial displacement of the roller-contact bearing (2) with respect to the guide sleeve (3) and means for fastening the roller-contact bearing (2) and the closing component (1) in traction, the means comprising a radially deformable annular clip (4) capable of interacting with an annular receiving groove (21) made on the closing component (1), characterised in that it comprises elastic axial thrust means fastened to the guide sleeve (3) and capable of interacting with the aforementioned clip during assembly operations so as to displace the clip from a standby position, which it occupies before the operations of assembling the bearing and the guide sleeve to the closing component, as far as into the reception groove.

2. Clutch release bearing device according to Claim 1, characterised in that the elastic axial thrust means comprise an annular ring (27) connected to the collar (17) of the guide sleeve (2) by at least two flexible tabs (28).

3. Clutch release bearing device according to Claim 2, characterised in that the flexible tabs (28) are inclined with respect to the axial direction of the device, so as to allow them to bend.

4. Clutch release bearing device according to Claim 1, characterised in that the elastic axial thrust means comprise at least three axial fingers (31, 37) attached by their base to the collar (17) of the guide sleeve (3).

5. Clutch release bearing device according to any one of the preceding claims, characterised in that it comprises means defining a standby position for the annular clip before assembly, provided on the inner race of the roller-contact bearing.

6. Clutch release bearing device according to any one of Claims 1 to 4, characterised in that it comprises means defining a standby position for the annular clip before assembly, provided on the closing component (1) in the vicinity of its end opposite the diaphragm.

7. Clutch release bearing device according to Claim 6, characterised in that the closing component has a cylindrical part (20) fitted with a reception groove (21) for the annular clip, and with an additional annular groove (34) whose diameter is less than that of the reception groove, serving as a standby position for the annular clip before assembly.

8. Clutch release bearing device according to any one of Claims 1 to 4, characterised in that it comprises means defining a standby position for the annular clip before assembly, provided on the guide sleeve (3).

9. Clutch release bearing device according to Claim 8, characterised in that the elastic axial thrust means comprise at least three axial fingers fastened by their base to the collar (17) of the guide sleeve (3), each axial finger comprising, at its free end, a retention member defining the standby position for the annular clip before assembly.

10. Clutch release bearing according to any one of the preceding claims, characterised in that the inner race (6) of the roller-contact bearing (2) has an annular rim (26) acting as a retainer and whose inner profile interacts with the annular clip (4) housed in the reception groove, so as to fasten the roller-contact bearing (2) to the closing component (1) when the roller-contact bearing (2) and the guide sleeve (3) slide on the guide tube (16) under the action of a pulling force exerted by an actuating member (14).

11. Clutch release bearing device according to any one of the preceding claims, characterised in that, in the free state, the internal diameter of the annular clip is less than or equal to the diameter at the bottom of the reception groove (21) made in the closing component (1).

12. Clutch release bearing device according to any one of the preceding claims, characterised in that it comprises means (24, 25) for centring and keeping the closing component (1) on the diaphragm (23) of the clutch before assembly.

13. Clutch release bearing device according to any one of the preceding claims, characterised in that it comprises a cover (11) encasing the roller-contact bearing (2) and the guide sleeve (3) and comprising means for holding the fingers (14) of an actuating member.

14. Assembly allowing a clutch release bearing device to be produced according to Claims 2 or 3, characterised in that it comprises a roller-contact bearing (2) fitted with an inner race (16) [sic] having an annular rim (26) retaining an annular clip (4) and a guide sleeve (3) having a tubular part (14), and a radial collar (17) in frictional contact with means (19) for self-centring the roller-contact bearing (2) and an annular ring (27) connected to the collar (17) of the guide sleeve by at least two flexible tabs (28).

15. Assembly enabling a clutch release bearing device to be produced according to one of Claims 8 or 9, characterised in that it comprises a roller-contact bearing (2), a guide sleeve (3) having a tubular part (15), a radial collar (17) in frictional contact with means (19) for self-centring the roller-contact bearing and at least three axial fingers (37) fastened by their base to the collar (17) of the guide sleeve (3) and comprising, at their end, a retention member (38) receiving a deformable annular clip (4) which is slightly prestressed radially by the said fingers.

16. Method of assembling a clutch release bearing device of the pulled type according to any one of the preceding claims, characterised in that:
- the closing component (1) and the assembly formed by the roller-contact bearing (2) and the guide sleeve (3) which slides on a guide tube (16) are displaced axially with respect to one another, the deformable annular clip (4) being in the standby position on one of these components, this displacement being achieved by an action of the fingers (14) of the actuating member;
- by continuing the aforementioned axial displacement, an axial thrust is exerted on the annular clip (4) by means of the elastic axial thrust means (27, 28; 31; 37) fastened to the guide sleeve (3);
- the axial thrust is continued on the elastic clip (4) which deforms radially until the moment at which it penetrates into the reception groove (21) of the closing component (1);
- an axial traction force is next exerted on the roller-contact bearing (2) by means of the fingers of the actuating member until the inner race of the roller-contact bearing (2) comes into contact with the clip (4) held in the reception groove (21).
